# FASCICULE DE BREVET EUROPEEN

(11) **EP 1 448 860 B1**
(45) Date de publication et mention de la délivrance du brevet: **20.01.2010**
(21) Numéro de dépôt: 02796849.4
(22) Date de dépôt: 20.11.2002
(51) Int. Cl.: E04F 15/02, F16B 5/00

(54) **DISPOSITIF DE LAME PROFILEE**
VORRICHTUNG MIT PROFILIERTER LEISTE
PROFILED STRIP DEVICE

(30) Priorité: 21.11.2001 FR 0115043
(43) Date de publication de la demande: 25.08.2004
(73) Titulaire: Grosfillex SAS, 01107 Oyonnax (FR)
(72) Inventeur: VULIN, Michel, F-01100 Oyonnax (FR)
(74) Mandataire: Intes, Didier Gérard André
(86) Numéro de dépôt international: PCT/FR2002/003963
(87) Numéro de publication internationale: WO 2003/044303

(56) Documents cités:
- EP-A- 0 220 389
- FR-A- 2 186 991
- FR-A- 2 623 228

## Description

La présente invention concerne un dispositif de lame profilée comprenant une lame profilée, qui présente une face apparente, dont un premier bord longitudinal a des moyens d'assemblage mâles et dont un deuxième bord longitudinal, opposé audit premier bord, a des moyens d'assemblage femelles, aptes à coopérer par emboîtement avec les moyens d'assemblage mâles du premier bord longitudinal d'une autre lame analogue.

En particulier, la lame profilée est une lame en matière plastique extrudée. De telles lames sont fabriquées sur de grandes longueurs, elles sont destinées à être placées sur un support, en particulier un mur ou un plafond, en étant assemblées entre elles par leurs bords longitudinaux, voir par exemple FR 2 623 228 A.

L'assemblage doit être aussi esthétique que possible. En particulier, l'assemblage apparaît esthétique s'il est précis. De manière générale, lorsque des lames sont assemblées, la délimitation entre elles est parfaitement visible et forme une ligne creuse entre leurs faces apparentes. Pour l'assemblage, les moyens d'assemblage mâles d'une lame sont insérés dans les moyens d'assemblage femelles de la lame adjacente. Dans cette situation, les faces apparentes de ces deux lames sont disposées bord à bord. Toutefois, la délimitation entre lesdites faces apparentes est visible et se présente sous la forme d'une ligne creuse. Une telle ligne n'est pas toujours esthétique et, selon les conditions d'assemblage entre les différentes lames, les lignes creuses ne sont pas toujours identiques entre elles. Ceci peut être dû à la profondeur de pénétration des moyens d'assemblage mâles et dans les moyens d'assemblage femelles, qui détermine évidemment la largeur de la ligne creuse d'assemblage.

L'invention a pour but de proposer un dispositif de lame profilée améliorant les conditions d'assemblage entre les lames et surtout l'esthétique de cet assemblage.

Ce but est atteint grâce au fait que les moyens d'assemblage mâles sont raccordés à la face apparente par une zone intermédiaire présentant une bande apparente plane formée en retrait par rapport à ladite face apparente et située sur un plan sensiblement parallèle à celui de ladite face apparente, lesdits moyens d'assemblage mâles étant eux-mêmes formés en retrait par rapport à ladite bande apparente.

Grâce à ces dispositions, la bande apparente est visible entre deux lames adjacentes, assemblées par leurs bords longitudinaux. Cette bande est en retrait par rapport aux faces apparentes des lames et l'oeil est davantage sensible à la présence de cette bande apparente, de largeur sensiblement constante, qu'à déceler l'endroit exact de la jonction entre les lames (cet endroit se trouve à l'extrémité des moyens d'assemblage femelles d'une lame et au bord de la bande apparente qui est lié aux moyens d'assemblage mâles de l'autre lame).

De plus, la profondeur de pénétration des moyens d'assemblage mâles d'une lame dans les moyens d'assemblage femelles de l'autre lame est limitée par le bord de la bande apparente à partir duquel lesdits moyens d'assemblage mâles sont formés en retrait.

Avantageusement, ce bord formé un ressaut qui constitue une butée faisant en sorte que, pour toutes les lames, les moyens d'assemblage mâles pénètrent dans les moyens d'assemblage femelles sur exactement la même profondeur.

De plus, la bande apparente est elle-même formée en retrait par rapport à la face apparente en étant avantageusement reliée à cette face par un autre ressaut. Lorsque deux lames sont assemblées, l'oeil est sensible à ce ressaut formé entre la bande apparente et la face apparente de la première lame. Il est également sensible à un autre ressaut formé entre le bord adjacent de la deuxième lame (bord dans lequel sont formés des moyens d'assemblage femelles) et la bande apparente de la première lame.

L'oeil ne distingue pas facilement entre ces deux ressauts, de sorte que, à quelque distance, on ne sait pas facilement à laquelle des deux lames appartient la bande apparente. En d'autres termes, la ligne creuse formée habituellement par l'assemblage entre le bord de la deuxième lame et les moyens d'assemblage mâles de la première lame n'est plus visible, mais c'est la bande apparente bordée par deux ressauts qui semblent identiques l'un à l'autre qui est remarquée par l'oeil. Ainsi, l'assemblage est plus net et donc plus esthétique.

Avantageusement, la lame profilée présente un premier et un deuxième bord transversaux ayant chacun une rainure formée sous la face apparente, et le dispositif comporte, en outre, une réglette d'assemblage susceptible d'être insérée dans lesdites rainures, la largeur de cette réglette étant telle que, lorsqu'elle est insérée dans l'une desdites rainures, elle dépasse de cette rainure sur une largeur supérieure à la profondeur de l'autre rainure.

La réglette d'assemblage permet d'assembler plusieurs lames profilées par leurs bords transversaux respectifs, en les disposant les unes au bout des autres. Par exemple, on peut couper les lames profilées à la longueur souhaitée en les assemblant entre elles de telle manière qu'elles présentent l'aspect d'un carrelage à grands carreaux, les bords longitudinaux des lames étant reliés par les moyens d'assemblage mâles et femelles précédemment évoqués, tandis que leurs bords transversaux sont reliés par les réglettes insérées dans les rainures des bords des lames en regard.

Dans un tel assemblage, les bandes apparentes sont visibles à la jonction longitudinale des lames comme évoqué précédemment, tandis que des zones médianes des réglettes sont également visibles, en raison du fait que la largeur des réglettes est supérieure à la somme des largeurs des rainures dans lesquelles elles sont insérées.

Très avantageusement, lorsque la réglette est insérée dans l'une desdites rainures, elle dépasse de cette rainure sur une largeur sensiblement égale à la somme de la largeur de la bande apparente et de la profondeur de l'autre rainure.

Grâce à cette caractéristique, lorsque plusieurs lames sont assemblées comme évoqué précédemment, les largeurs visibles des réglettes sont sensiblement égales aux largeurs des bandes apparentes. Dans la mesure où les bandes apparentes sont formées en retrait, tandis que les réglettes le sont également puisqu'elles sont insérées dans des rainures, les bandes apparentes et les largeurs visibles des réglettes présentent, vues à quelque distance, un aspect analogue à des joints de carrelage ménagés en creux par rapport aux carreaux.

Selon un mode de réalisation avantageux, la lame comporte une paroi avant et une paroi arrière qui présente respectivement la face apparente et la face arrière et qui sont reliées par des voiles de liaison, et les rainures sont formées par des entailles des voiles de liaison.

S'agissant de lames extrudées, il est fréquent qu'elles présentent une paroi avant et une paroi arrière reliées par des voiles de liaison. Selon l'invention, les lames extrudées de la sorte peuvent être coupées aux longueurs souhaitées et, pour former les rainures, il suffit d'entailler les voiles de liaison sur les bords transversaux des lames. Ces entailles peuvent être réalisées très facilement à l'aide d'un outil de découpe du genre fraise, dont la position et l'actionnement sont réglés de telle sorte que les entailles soient réalisées juste sous la paroi avant de la lame.

Selon une présentation avantageuse, le dispositif comporte plusieurs lames profilées analogues et une plaque de réglettes d'assemblage, ladite plaque étant formée de réglettes d'assemblage reliées entre elles par des moyens de pré-découpe permettant de séparer les réglettes les unes des autres.

Cette présentation permet un conditionnement aisé des lames pour leur commercialisation. Les lames peuvent toutes être coupées à la même longueur ou à des longueurs différentes, et leurs bords transversaux présentent les rainures évoquées précédemment. Les réglettes d'assemblage peuvent être formées par extrusion de plaques d'assemblage présentant des stries qui forment lesdits moyens de pré-découpe. En effet, une réglette est alors formée entre deux stries, et les réglettes peuvent être séparées les unes des autres par rupture manuelle de la plaque selon les stries, ou bien par découpe à l'aide d'un outil, manipulé par l'utilisateur final et guidé par les stries.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue en coupe transversale d'une lame profilée appartenant à un dispositif selon l'invention ;
- la figure 2 montre, en coupe longitudinale, l'assemblage de deux lames profilées par leurs bords transversaux respectifs ;
- la figure 3 montre, en coupe transversale, l'assemblage de deux lames profilées par leurs bords longitudinaux respectifs ;
- la figure 4 est une vue en plan d'une lame profilée appartenant au dispositif de l'invention ;
- la figure 5 montre, en coupe transversale, une plaque formée d'une pluralité de réglettes d'assemblage ; et
- la figure 6 montre l'assemblage de plusieurs plaques profilées sur un support tel qu'un mur.

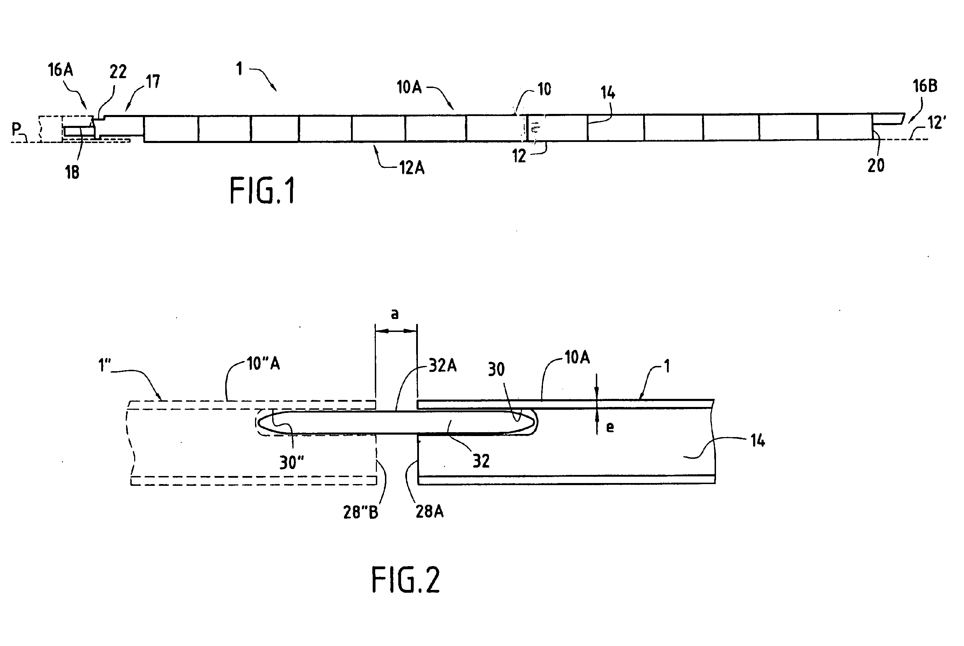

La lame profilée 1 de la figure 1 comporte une paroi avant 10 et une paroi arrière 12 reliées par des voiles de liaison 14. Par convention, la face apparente 10A de la lame est la face avant de la paroi, tandis que la face arrière 12A est la face arrière de la paroi arrière 12. Le premier bord longitudinal 16A de la lame présente des moyens d'assemblage mâles 18, tandis que le deuxième bord longitudinal 16B présente des moyens d'assemblage femelles 20.

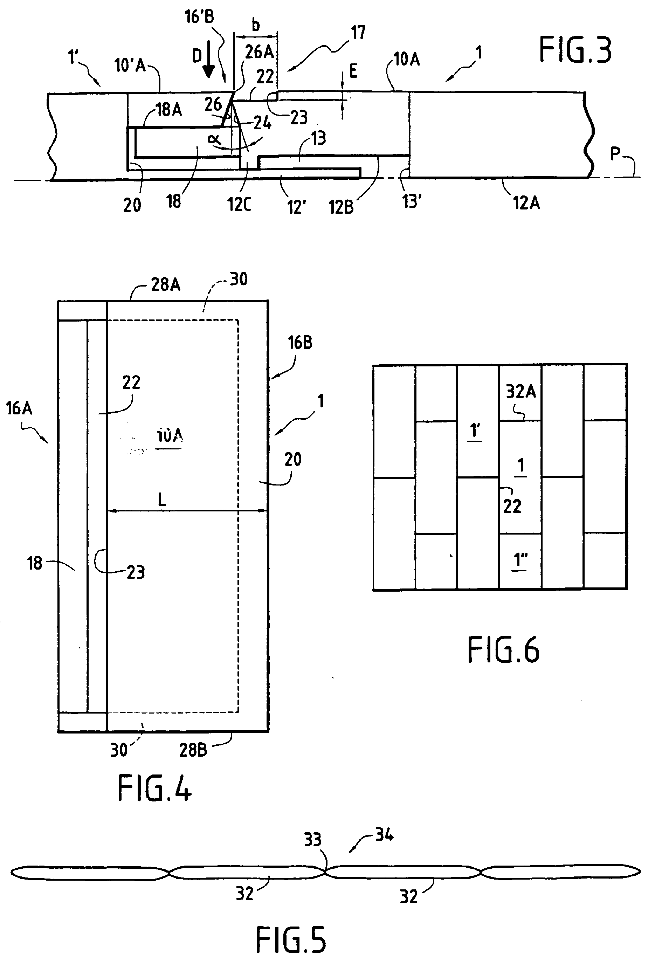

Sur la vue en plan de la figure 4, la face apparente 10A est disposée sur le dessus et l'on voit que les moyens d'assemblage mâles 18 ont la forme d'une languette continue sur la longueur de la lame profilée, tandis que les moyens d'assemblage femelles ont la forme d'une rainure formée sous cette face apparente, sur le bord longitudinal 16B de la lame, rainure dans laquelle la languette des moyens d'assemblage mâles peut être disposée.

Les moyens d'assemblage mâles sont reliés à la face apparente 10A par une zone intermédiaire 17 qui présente une bande apparente 22 formée en retrait par rapport à la face apparente 10A. La bande apparente 22 est une bande plane, sensiblement parallèle à la face apparente 10A, qui reste visible lorsque les moyens d'assemblage mâles sont insérés dans les moyens d'assemblage femelles d'une autre lame adjacente, comme on le voit sur la figure 3. Comme on le voit mieux sur cette figure 3, les moyens d'assemblage mâles 18 sont raccordés à la bande apparente 22 par une contre-marche 24 (ou un ressaut) formée en contre-dépouille (l'angle α de la contre-dépouille par rapport à une direction D perpendiculaire au plan de la bande apparente est par exemple de l'ordre de 30°). De son côté, la bande apparente 22 est reliée à la face apparente 10A de la lame par un ressaut 23 ou une contre-marche.

Comme on le voit sur la figure 3 pour la lame profilée 1' à laquelle est raccordée la lame profilée 1 pourvue des moyens d'assemblage mâles 18, les moyens d'assemblage femelles 20 sont raccordés à la face apparente 10'A par un décrochement ayant un nez rentrant 26. De ce fait, le contact entre les lames 1 et 1' s'opère sur des zones de très faibles surfaces, et forme donc une ligne de contact nette. De plus, vu depuis une direction D perpendiculaire aux faces apparentes des lames, le bord supérieur 26A du nez rentrant 26 masque le bord de la bande apparente 22. On ne distingue pas, lorsque l'on considère les lames selon la direction D, de zones d'interruption entre ces lames, mais l'on constate seulement que la bande apparente 22 est en retrait par rapport aux faces apparentes 10A et 10'A, des décrochements étant formés sur les deux bords longitudinaux de la bande apparente.

La face arrière 12A de la lame 1 présente, à l'arrière de la zone intermédiaire 17, une portion en retrait 12B et un bossage 12C. Ce bossage 12C repose sur la languette 12', qui appartient à la lame profilée 1' et qui est formé au bord 16'B de cette dernière, sous la rainure 20 des moyens d'assemblage femelles dont elle délimite le fond. Ainsi, le bossage 12C peut reposer sur la languette 12' en faisant en sorte que les faces arrière des deux lames 1 et 1' reposent sur le même plan d'appui P. Grâce à la zone en retrait 12B, un espace vide 13 subsiste au-dessus de la languette 12', ce qui donne une légère possibilité de débattement à la zone intermédiaire 17, permettant son positionnement correct par rapport à la lame 1'.

Comme on le voit sur la figure 3, les moyens d'assemblage mâles 18 ne parviennent pas tout à fait au fond des rainures 20, puisque le contact entre les lames se fait par le bord de la bande apparente et le nez rentrant précédemment évoqué. De même, la languette 12' ne parvient pas au contact des décrochements 13' à partir duquel est formée la portion en retrait 12B. Cette portion en retrait et le bossage 12C sont disposés successivement dans le sens allant vers la languette 18.

La lame profilée 1 présente deux bords transversaux, respectivement 28A et 28B, qui présentent chacun une rainure d'assemblage. Plus précisément, comme on le voit sur la figure 2, le bord transversal 28A comporte une rainure 30. Le bord transversal opposé comporte une rainure analogue. La figure 2 montre l'assemblage de la lame 1 avec une autre lame analogue 1", par leurs bords transversaux respectifs, 28A, 28"B, situés en vis-à-vis. On voit que le bord transversal 28"B de la lame 1" présente une rainure 30" analogue à la rainure 30.

Une réglette d'assemblage 32 est insérée dans les rainures 30 et 30". Dans cette situation, on voit qu'elle parvient au fond de ces rainures mais qu'une portion médiane 32A de cette réglette reste visible, du côté des faces apparentes 10A et 10"A des deux lames. De préférence, la largeur a de cette portion 32A est sensiblement égale à la largeur b de la bande apparente 22 qui est visible lorsque les lames 1 et 1' sont assemblées sur la figure 3. Pour cela, la réglette, lorsqu'elle est insérée dans la rainure 30, dépasse de cette rainure sur une largeur sensiblement égale à la somme de la largeur b de la bande apparente et de la profondeur de l'autre rainure de la lame, analogue à la rainure 30". Considérant une même lame, les rainures 30 de ses deux bords transversaux peuvent avoir la même profondeur ou être de profondeur différente. L'important est que la largeur de la réglette soit déterminée en conséquence. Lorsqu'on évoque ci-dessus la profondeur des rainures 30, 30", on s'intéresse en réalité à la profondeur de pénétration de la réglette 32 dans ces rainures, cette profondeur pouvant être limitée par d'autres butées que le fond des rainures (par exemple, des ressauts formés sur la réglette).

Avantageusement, l'épaisseur e des lames entre la rainure 30 et la face apparente 10A sur les bords transversaux de la lame (voir figure 2) est sensiblement égale à la profondeur E du retrait entre la face apparente 10A et la bande apparente 22 sur le premier bord longitudinal de la lame. Ainsi, lorsque différentes lames sont assemblées entre elles, les parties apparentes 32A des réglettes 32 et les bandes apparentes 22 sont situées sur sensiblement un même plan parallèle au plan d'appui des lames, de sorte que les parties visibles des réglettes des bandes apparentes se présentent comme des joints d'assemblage entre des carreaux de carrelage.

En l'espèce, la lame profilée n'est pas une lame pleine, mais les voiles de liaison lui donnent une épaisseur apparente. Pour former les rainures, il suffit d'entailler les voiles de liaison 14 comme on le voit sur la figure 2. Comme on le voit également sur cette figure, les rainures 30 sont formées avantageusement juste sous la paroi avant 10 de la lame. En d'autres termes, sur une profondeur faible correspondant à la profondeur de la rainure 30, on coupe seulement les sommets des voiles de liaison 14 reliant ces voiles à la paroi 10. Dans ce cas, la profondeur E du retrait entre la bande apparente 22 et la face apparente 10A est elle-même sensiblement égale à l'épaisseur de la paroi 10. Dans la région des coins formés entre les bords transversaux et le premier bord longitudinal 16A de la bande, les moyens d'assemblage mâles et les rainures 30 se rejoignent. Dans ces circonstances, comme on le voit sur la figure 4, les rainures 30 viennent localement supprimer les extrémités de la bande apparente, le fond de ces rainures étant sensiblement situé sur le même plan que la face supérieure 18A de la languette 18, cette face supérieure étant celle qui est tournée vers la face apparente 10A.

Les réglettes d'assemblage peuvent avoir une longueur sensiblement égale à la largeur L de la lame 1, mesurée entre son bord longitudinal où se trouvent les moyens d'assemblage mâles et le bord libre de la bande apparente 22, ou bien avoir une longueur supérieure. En effet, dans un tel cas, on peut assembler plusieurs groupes de lames avec une même réglette.

Ceci étant, comme on le voit sur la figure 6, l'invention permet d'assembler des lames profilées en les décalant les unes par rapport aux autres dans le sens de leur longueur. On évite ainsi que l'assemblage n'ait un aspect monotone. On voit par exemple que la lame 1 est assemblée avec une lame 1' sur son bord longitudinal, tandis qu'elle est assemblée avec la lame 1" par un bord transversal et que le bord transversal de la lame 1' se trouve sensiblement au milieu de la longueur de la lame 1. Les zones de jonction entre les différentes lames sont formées par les bandes apparentes 22 et les parties apparentes 32A des réglettes, qui ont sensiblement la même largeur (épaisseur des "faux-joints") et qui se trouvent sensiblement sur un même plan, en retrait par rapport au plan des faces apparentes des lames reliées entre elles.

De préférence, les réglettes et les bandes apparentes ont le même décor, qui peut être le même que celui des faces apparentes des lames ou qui peut être légèrement différent. Par exemple, les lames peuvent être imprimées et vernies avec un motif reproduisant un aspect particulier, par exemple celui de la pierre ou du bois, tandis que les bandes apparentes et les réglettes peuvent être unies, pour ressembler à des joints. Dans la mesure où les bandes apparentes sont situées en retrait par rapport aux faces apparentes, il est aisé de faire en sorte, lorsque l'on décore les faces apparentes des lames, d'éviter que ce décor n'affecte également les bandes apparentes. Quant aux réglettes, elles sont fabriquées séparément et leur décor ne pose pas de difficulté.

La figure 5 montre une plaque 34 de réglettes d'assemblage 32, qui sont reliées entre elles par des moyens de pré-découpe formés par des stries 33. Avantageusement, dans la région de ces stries, les bords des réglettes sont légèrement chanfreinés ou arrondis pour faciliter leur insertion dans les rainures 30 des lames.

## Revendications

1. Dispositif de lame profilée comprenant une lame profilée (1, 1', 1") présentant une face apparente (10A), un premier bord longitudinal (16A) de la lame ayant des moyens d'assemblage mâles (18) et un deuxième bord longitudinal (16B) de ladite lame, opposé audit premier bord, ayant des moyens d'assemblage femelles (20), aptes à coopérer par emboîtement avec les moyens d'assemblage mâles du premier bord longitudinal d'une autre lame analogue,
**caractérisé en ce que** les moyens d'assemblage mâles (18) sont raccordés à la face apparente (10A) par une zone intermédiaire (17) présentant une bande apparente(22) plane formée en retrait par rapport à ladite face apparente (10A) et située sur un plan sensiblement parallèle à celui de ladite face apparente, lesdits moyens d'assemblage mâles (18) étant eux-mêmes formés en retrait par rapport à ladite bande apparente (22) et **en ce que** le bord de la bande apparente (22) est apte, lorsque les moyens d'assemblage mâles (18) d'une lame sont engagés dans les moyens d'assemblage femelles (20) d'une lame analogue, à coopérer en butée avec lesdits moyens d'assemblage femelles (20), de sorte que la bande apparente (22) plane se présente comme un joint d'assemblage entre des carreaux de carrelage.

2. Dispositif selon la revendication 1, **caractérisé en ce que** la lame profilée (1, 1', 1") présente une face arrière (12A), opposée à la face apparente et définissant un plan d'appui (P), ladite face arrière présentant, à l'arrière de la zone intermédiaire (17) et successivement disposés dans le sens allant vers les moyens d'assemblage mâles, une portion (12B) en retrait par rapport au plan d'appui (P) et un bossage (12C).

3. Dispositif selon la revendication 1 ou 2, **caractérisé en ce que** les moyens d'assemblage mâles (18) sont raccordés à la bande apparente (22) par une contre-marche (24) en contre-dépouille.

4. Dispositif selon l'une quelconque des revendications 1 à 3, **caractérisé en ce que** les moyens d'assemblage femelles (20) sont raccordés à la face apparente (10A) par un décrochement ayant un nez rentrant (26).

5. Dispositif selon l'une quelconque des revendications 1 à 4, **caractérisé en ce que** la lame (1, 1', 1") présente un premier et un deuxième bord transversaux (28A, 28B) ayant chacun une rainure (30, 30") formée sous la face apparente (10A), et **en ce qu'**il comporte en outre une réglette d'assemblage (32) susceptible d'être insérée dans lesdites rainures, la largeur de cette réglette étant telle que, lorsqu'elle est insérée dans l'une desdites rainures, elle dépasse de cette rainure sur une largeur supérieure à la profondeur de l'autre rainure.

6. Dispositif selon la revendication 5, **caractérisé en ce que**, lorsque la réglette (32) est insérée dans l'une desdites rainures (30, 30"), elle dépasse de cette rainure sur une largeur (a) sensiblement égale à la somme de la largeur de la bande apparente et de la profondeur de l'autre rainure.

7. Dispositif selon l'une quelconque des revendications 5 et 6, **caractérisé en ce que** l'épaisseur (e) de lame entre la rainure (30) et la face apparente (10A) sur les bords transversaux (28A, 28B) est sensiblement égale à la profondeur (E) du retrait entre la face apparente (10A) et la bande apparente (22) sur le premier bord longitudinal (16A) de ladite lame (1, 1', 1").

8. Dispositif selon l'une quelconque des revendications 5 à 7, **caractérisé en ce que** la lame (1, 1', 1") comporte une paroi avant (10) et une paroi arrière (12), présentant respectivement la face apparente (10A) et la face arrière (12A) et reliées par des voiles de liaison (14), et **en ce que** lesdites ramures (30, 30") sont formées par des entailles des voiles de liaison.

9. Dispositif selon l'une quelconque des revendications 5 à 8, **caractérisé en ce que** la réglette (32) et la bande apparente (22) ont le même décor.

10. Dispositif selon l'une quelconque des revendications 5 à 9, **caractérisé en ce qu'**il comporte plusieurs lames profilées (1, 1', 1") analogues et une plaque (34) de réglettes d'assemblage (32), ladite plaque étant formée de réglettes d'assemblage reliées entre elles par des moyens de pré-découpe (33) permettant de séparer les réglettes les unes des autres.

## Claims

1. A shaped-section slat device comprising a shaped-section slat (1, 1', 1") having a visible face (10A), a first longitudinal edge (16A) of the slat having male assembly means (18) and a second longitudinal edge (16B) of said slat, opposite from said first edge, having female assembly means (20), suitable for co-operating by inter-fitting with the male assembly means on the first longitudinal edge of another, analogous slat;
said device being **characterized in that** the male assembly means (18) are connected to the visible face (10A) via an intermediate zone (17) having a plane visible margin (22) set back relative to said visible face (10A) and situated in a plane substantially parallel to the plane of said visible face, said male assembly means (18) themselves being set back relative to said visible margin (22), and **in that** the edge of the visible margin (22) is suitable, when the male assembly means (18) of one slat are engaged in the female assembly means (20) of an analogous slat, for co-operating in abutment with said female assembly means (20), so that the plane visible margin (22) looks like grouting between tiles.

2. A device according to claim 1, **characterized in that** the shaped-section slat (1, 1', 1") has a back face (12A) opposite from the visible face and defining a bearing plane (P), said back face having a set-back portion (12B) that is set back relative to the bearing plane (P) and a projection (12C), said set-back portion and said projection being disposed behind the intermediate zone (17) and in succession in the direction going towards male assembly means.

3. A device according to claim 1 or claim 2, **characterized in that** the male assembly means (18) are connected to the visible margin (22) via a riser (24) disposed at an undercut angle.

4. A device according to any one of claims 1 to 3, **characterized in that** the female assembly means (20) are connected to the visible face (10A) via a setback having an overhanging nose (26).

5. A device according to any one of claims 1 to 4, **characterized in that** the slat (1, 1', 1") has first and second transverse edges (28A, 28B), each of which is provided with a groove (30, 30") formed under the visible face (10A), and **in that** it further comprises an assembly strip (32) suitable for being inserted into said grooves, the width of said strip being such that, when it is inserted in one of said grooves, it projects from said groove over a width greater than the depth of the other groove.

6. A device according to claim 5, **characterized in that**, when the strip (32) is inserted in one of said grooves (30, 30"), it projects from said groove over a width (a) substantially equal to the sum of the width of the visible margin and of the depth of the other groove.

7. A device according to claim 5 or claim 6, **characterized in that** the thickness (e) of slat between the groove (30) and the visible face (10A) over the transverse edges (28A, 28B) is substantially equal to the depth (E) of the set-back between the visible face (10A) and the visible margin (22) over the first longitudinal edge (16A) of said slat (1, 1', 1").

8. A device according to any one of claims 5 to 7, **characterized in that** the slat (1, 1', 1") has a front wall (10) and a back wall (12), respectively having the visible face (10A) and the back face (12A) and interconnected by interconnecting webs (14), and **in that** said grooves (30, 30") are formed by notches cut in the interconnecting webs.

9. A device according to any one of claims 5 to 8, **characterized in that** the strip (32) and the visible margin (22) have the same decoration.

10. A device according to any one of claims 5 to 9, **characterized in that** it comprises a plurality of analogous shaped-section slats (1, 1', 1") and a sheet (34) of assembly strips (32), said sheet being formed of assembly strips interconnected by pre-cut means (33) making it possible to separate the strips from one another.

## Patentansprüche

1. Profilleistenvorrichtung mit einer Profilleiste (1, 1', 1"), die eine sichtbare Seite (10A) aufweist, wobei eine erste Längskante (16A) der Leiste Einsteckverbindungsmittel (18) und eine zweite Längskante (16B) der Leiste, welche der ersten Kante gegenüberliegt, Aufnahmeverbindungsmittel (20) aufweist, die geeignet sind, mit den Einsteckverbindungsmitteln der ersten Längskante einer entsprechenden weiteren Leiste ineinandergreifend zusammenzuwirken,
**dadurch gekennzeichnet, daß** die Einsteckverbindungsmittel (18) über einen Zwischenbereich (17) an die sichtbare Seite (10A) angefügt sind, welcher Zwischenbereich einen ebenen sichtbaren Streifen (22) aufweist, der gegenüber der sichtbaren Seite (10A) zurückspringend ausgebildet ist und in einer zur Ebene der sichtbaren Seite im wesentlichen parallelen Ebene liegt, wobei die Einsteckverbindungsmittel (18) selbst gegenüber dem sichtbaren Streifen (22) zurückspringend ausgebildet sind, und daß der Rand des sichtbaren Streifens (22) geeignet ist, wenn die Einsteckverbindungsmittel (18) einer Leiste in die Aufnahmeverbindungsmittel (20) einer entsprechenden Leiste eingesteckt sind, mit den Aufnahmeverbindungsmitteln (20) in Anschlag zusammenzuwirken, so daß der ebene sichtbare Streifen (22) wie eine Verbindungsfuge zwischen Fliesen eines Fliesenfußbodens erscheint.

2. Vorrichtung nach Anspruch 1, **dadurch gekennzeichnet, daß** die Profilleiste (1, 1', 1 ") eine Rückseite (12A) aufweist, die der sichtbaren Seite gegenüberliegt und eine Auflageebene (P) bildet, wobei die Rückseite - auf der Rückseite des Zwischenbereichs (17) und in Richtung der Einsteckverbindungsmittel hintereinander angeordnet - einen gegenüber der Auflageebene (P) zurückspringenden Abschnitt (12B) sowie einen Buckel (12C) aufweist.

3. Vorrichtung nach Anspruch 1 oder 2, **dadurch gekennzeichnet, daß** die Einsteckverbindungsmittel (18) über eine hinterschnittene Setzstufe (24) an den sichtbaren Streifen (22) angefügt sind.

4. Vorrichtung nach einem der Ansprüche 1 bis 3, **dadurch gekennzeichnet, daß** die Aufnahmeverbindungsmittel (20) über einen eine einspringende Nase (26) aufweisenden Absatz an die sichtbare Seite (10A) angefügt sind.

5. Vorrichtung nach einem der Ansprüche 1 bis 4, **dadurch gekennzeichnet, daß** die Leiste (1, 1', 1") einen ersten und einen zweiten Querrand (28A, 28B) aufweist, die jeweils eine unter der sichtbaren Seite (10A) gebildete Nut (30, 30") aufweisen, und daß sie ferner einen Verbindungsstreifen (32) umfaßt, der geeignet ist, in die Nuten eingesteckt zu werden, wobei die Breite dieses Streifens derart ist, daß er dann, wenn er in eine der Nuten eingesteckt ist, über diese Nut über eine Breite hinausragt, die größer als die Tiefe der anderen Nut ist.

6. Vorrichtung nach Anspruch 5, **dadurch gekennzeichnet, daß** wenn der Streifen (32) in eine der Nuten (30, 30") eingesteckt ist, er über diese Nut über eine Breite (a) hinausragt, die im wesentlichen gleich der Summe aus der Breite des sichtbaren Streifens und der Tiefe der anderen Nut ist.

7. Vorrichtung nach einem der Ansprüche 5 und 6, **dadurch gekennzeichnet, daß** die Dicke (e) der Leiste zwischen der Nut (30) und der sichtbaren Seite (10A) an den Querrändern (28A, 28B) im wesentlichen gleich der Tiefe (E) des Rücksprungs zwischen der sichtbaren Seite (10A) und dem sichtbaren Streifen (22) an der ersten Längskante (16A) der Leiste (1, 1', 1") ist.

8. Vorrichtung nach einem der Ansprüche 5 bis 7, **dadurch gekennzeichnet, daß** die Leiste (1, 1', 1") eine vordere Wand (10) und eine hintere Wand (12) umfaßt, welche die sichtbare Seite (10A) bzw. die Rückseite (12A) aufweisen und jeweils durch Verbindungswände (14) verbunden sind, und daß die Nuten (30, 30") durch Einschnitte der Verbindungswände gebildet sind.

9. Vorrichtung nach einem der Ansprüche 5 bis 8, **dadurch gekennzeichnet, daß** der Streifen (32) und der sichtbare Streifen (22) die gleiche Verzierung haben.

10. Vorrichtung nach einem der Ansprüche 5 bis 9, **dadurch gekennzeichnet, daß** sie mehrere entsprechende Profilleisten (1, 1', 1") sowie eine Platte (34) aus Verbindungsstreifen (32) umfaßt, wobei die Platte von Verbindungsstreifen gebildet ist, welche durch Vorschneidemittel (33) untereinander verbunden sind, die das Trennen der Streifen voneinander ermöglichen.
